# EUROPEAN PATENT APPLICATION

(11) **EP 2 982 871 A1**
(43) Date of publication of application: **10.02.2016**
(21) Application number: 14779598.3
(22) Date of filing: 19.02.2014
(51) Int. Cl.: F16B 5/02, B29C 70/10, C08J 5/04, B29K 105/08, B29K 105/10, B29L 9/00

(54) **COMPOSITE MATERIAL LIGHTWEIGHT COUPLING**

(30) Priority: 05.04.2013 JP 2013079902
(71) Applicant: Shikibo Ltd., Osaka-shi, Osaka 541-8516 (JP)
(72) Inventor: KAIGOME Shun, Osaka-shi Osaka 541-8516 (JP); ISHIBASHI Masayasu, Osaka-shi Osaka 541-8516 (JP); HIROKAWA Tetsuro, Osaka-shi Osaka 541-8516 (JP); TANAMURA Takeshi, Osaka-shi Osaka 541-8516 (JP)
(74) Representative: Mischung, Ralf
(86) International application number: PCT/JP2014/053861
(87) International publication number: WO 2014/162789

(57) **Abstract**

In a composite lightweight fitting, at least one reinforced fiber layer (3a) of reinforced fiber layers (3) includes a reinforced fiber bundle (4) formed by aligning a large number of reinforced fibers into a belt-like shape, the reinforced fiber bundle (4) including a round portion (4a) arranged along a periphery of a through-hole (2). The round portion (4a) of the reinforced fiber bundle (4) is twisted.

## Description

### Technical Field

The present invention relates to a composite lightweight fitting formed of a composite material obtained by impregnating and curing a matrix in a laminated body formed by laminating reinforced fiber layers.

### Background Art

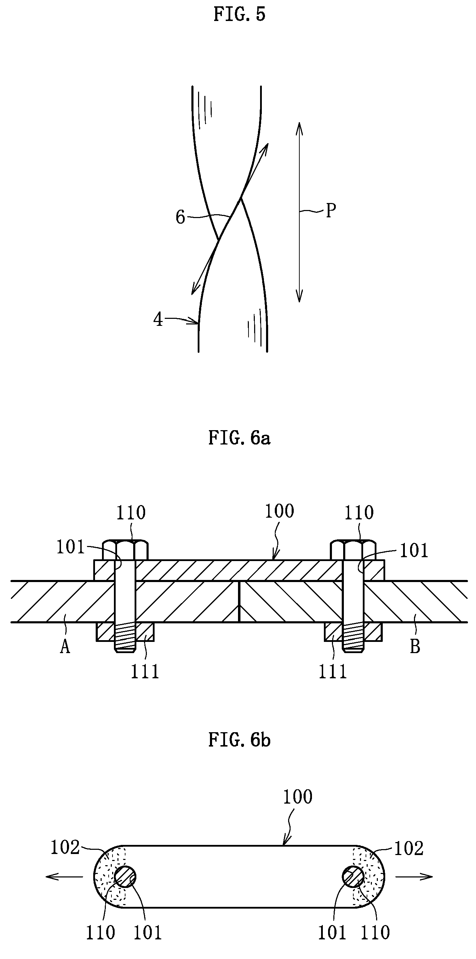

Fittings are used for coupling a plurality of members to each other. For example, those fittings are used for various purposes, specifically, in transportation equipment such as an aircraft and an automobile, and in constructions such as a building and a bridge. More specifically, as illustrated in FIGS. 6, for example, when a member A and a member B are coupled to each other with a fitting 100, bolts 110 are inserted respectively through a pair of through-holes 101 formed at both ends of the fitting 100 and through-holes of the members A and B, and nuts 111 are fixed to distal ends of those bolts 110 by screwing. When stresses in tensile directions are applied to the fitting 100 (refer to the arrows in FIG. 6(b)), high stresses are applied to end portion-side regions 102 (regions indicated by the dotted pattern) around the through-holes 101 of the fitting 100 through intermediation of the bolts 110. Thus, it is important to increase strengths around the through-holes 101 of the fitting 100, in particular, in the end portion-side regions 102.

By the way, as an example of such a fitting, there has been known a composite lightweight fitting formed of a composite material obtained by impregnating and curing a matrix, such as a resin, in a laminated body formed by laminating reinforced fiber layers. The reinforced fiber layers are each formed of reinforced fibers (hereinafter also simply referred to as "fibers") aligned in a predetermined direction. The composite lightweight fitting is excellent in strength per unit weight (specific strength), and hence is suited particularly to use as a fitting for the transportation equipment that is required to be reduced in weight, such as the aircraft (in particular, equipment to be moved or rotated at high speed).

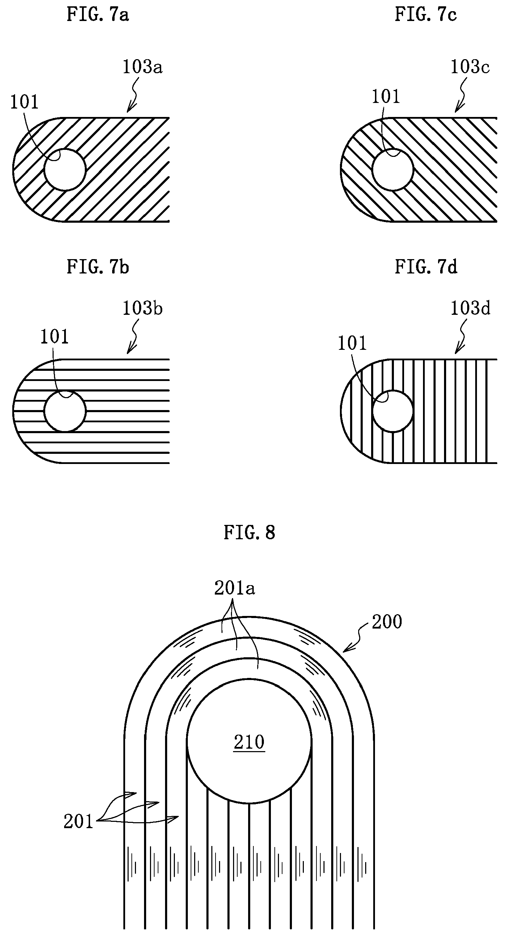

The composite lightweight fitting is formed, for example, by laminating reinforced fiber layers 103a to 103d different in fiber orientation direction from each other as illustrated in FIGS. 7. The composite material is formed by impregnating and solidifying a matrix in a laminated body formed by laminating such reinforced fiber layers 103a to 103d. Then, drilling processing is performed on the composite material with a drill and the like. With this, the through-holes 101 can be formed. However, in this case, the reinforced fibers of all the reinforced fiber layers 103a to 103d are cut as a result of the drilling processing, and hence the strengths around the through-holes 101 of the fitting 100, in particular, tensile strengths in the end portion-side regions 102 are decreased. Specifically, when the stresses in the tensile direction are applied to the fitting as described above, those stresses are to be transmitted by the reinforced fiber layer 103b (refer to FIG. 7(b)) in which the fibers are oriented in a direction of stress application. However, those fibers are split by the through-holes 101. Thus, the stresses cannot be transmitted only by the reinforced fiber layer 103b, that is, cannot be transmitted without cooperation with the other reinforced fiber layers. As a result, the reinforced fiber layers may be separated from each other due to the tensile stresses, which may cause decrease in strength of the fitting.

For example, in Patent Literature 1, there is disclosed a fitting in which the fibers are arranged in a circular-arc form along a periphery of the through-hole. The fibers curved in the circular-arc form are not cut even when the through-hole is formed. Further, without the cooperation with the other reinforced fiber layers, the tensile stresses to be applied to the fitting can be transmitted only by the reinforced fiber layer including the fibers curved in the circular-arc form. Thus, the reinforced fiber layers can be prevented from being separated from each other due to the tensile stresses. With this, the strength of the fitting, in particular, the strengths around the through-holes can be increased.

### Citation List

Patent Literature 1: JP 07-81225 B

### Summary of Invention

### Technical Problem

However, the composite lightweight fitting as disclosed in Patent Literature 1, in which the reinforced fibers are arranged in the circular-arc form along the periphery of the through-hole, cannot exert required performance, and hence has not yet been practically used at present. The reason is considered as follows.

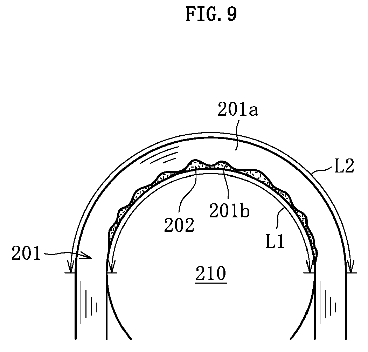

In general, the reinforced fiber layers are each formed by using reinforced fiber bundles (tows) each including a large number of reinforced fibers (filaments) aligned into a belt-like shape. FIG. 8 is an illustration of a reinforced fiber layer 200 in which belt-like reinforced fiber bundles 201 are arranged along a periphery of a through-hole 210. In this case, in each of the reinforced fiber bundles 201, in a round portion 201a curved in a circular-arc form along the periphery of the through-hole 210, the fiber bundle 201 has different circumferential lengths on its inner periphery and outer periphery. In particular, when the through-hole 210 has a smaller diameter, as illustrated in FIG. 9, a ratio of an outer circumferential length L2 to an inner circumferential length L1 (L2/L1) of the round portion 201a of each of the reinforced fiber bundles 201 becomes higher. Thus, a reinforced fiber 201b on the inner peripheral side is corrugated to swell in a lamination direction of the fiber layers (direction orthogonal to the drawing sheet of FIG. 9). The reinforced fibers that are corrugated in this way scarcely contribute to the strength of the fitting. As a result, the strength of the fitting is decreased.

Further, when the laminated body including the reinforced fiber layers as described above is impregnated with the matrix such as a resin, a resin 202 (indicated by the dotted pattern) is cured after entering parts formed as a result of the corrugation and swelling of the reinforced fiber 201b on the inner peripheral side. The matrix such as a resin is significantly smaller in strength than the reinforced fibers. Thus, when parts formed substantially of the resin (resin-rich portions) are formed to occupy a large part of an inside of the composite material, the strength of the fitting is decreased. In particular, as illustrated in FIG. 9, when a large part of the resin 202 is exposed in the through-hole 210, a pin (such as bolt, not shown) inserted through the through-hole 210 is held in direct contact with the resin 202. Thus, the resin 202 is liable to be fractured by a load to be applied from the pin. When the resin-rich portions are fractured in this way, axial centers of the pin and the through-hole 210 are displaced from each other. As a result, the strength of the fitting is decreased.

In addition, a degree of the corrugation of the reinforced fiber 201b on the inner peripheral side as described above is different from product to product. Thus, the tensile strength of the corrugated reinforced fiber 201b and the amount of the resin 202 to enter the parts formed as a result of the corrugation of the reinforced fiber 201b are fluctuated from product to product. As a result, the strength of the fitting is significantly fluctuated from product to product.

As described above, when the strength of the fitting is decreased or fluctuated, a larger number of the reinforced fibers need to be used so as to secure the strength. As a result, a higher cost is required, and weight reduction cannot be achieved.

Specifically, when the reinforced fiber bundles are narrowed, a difference between the inner circumferential length and the outer circumferential length is decreased in each of the round portions. With this, the corrugation of the inner peripheral fibers can be suppressed. However, when the fiber bundles are narrowed, the number of the fibers of each of the fiber bundles is decreased. Thus, the number of the fiber bundles needs to be increased so as to secure a total number of the fibers. As a result, the number of man-hours for supplying the fiber bundles is increased, and hence productivity is deteriorated.

It is an object of the present invention to suppress decrease and fluctuation in strength of a composite lightweight fitting, and to achieve cost reduction and weight reduction of the composite lightweight fitting without deteriorating productivity.

### Solution to Problem

According to one embodiment of the present invention, which is devised to achieve the above-mentioned object, there is provided a composite lightweight fitting, comprising a composite material comprising a laminated body formed by laminating reinforced fiber layers, and a matrix impregnated and cured in the laminated body, the composite lightweight fitting having a through-hole formed through the reinforced fiber layers in a thickness direction of the reinforced fiber layers, wherein at least one reinforced fiber layer of the reinforced fiber layers comprises a reinforced fiber bundle formed by aligning a large number of reinforced fibers into a belt-like shape, the reinforced fiber bundle comprising a round portion arranged along a periphery of the through-hole, and wherein the round portion of the reinforced fiber bundle is twisted.

In this way, when the round portion of the reinforced fiber bundle, which is arranged along the periphery of the through-hole, is twisted, reinforced fibers on an inner peripheral side of the round portion and reinforced fibers on an outer peripheral side of the round portion are reversed to each other. Thus, in comparison with a case where the fibers of the round portion are aligned parallel to each other, a difference in fiber length can be reduced even when an inner circumferential length of the round portion and an outer circumferential length of the round portion are different from each other. With this, a risk in that the fibers on the inner peripheral side of the round portion are corrugated to swell is suppressed. As a result, the fitting is increased in strength around the through-hole (end portion-side region). Further, when the fibers on the inner peripheral side are suppressed from being corrugated to swell, the amount of the matrix to enter parts formed as a result of the swelling is reduced. Thus, formation of matrix-rich portions in the composite material, in particular, formation of a matrix-rich portion in the end portion-side region of the fitting is suppressed. As a result, fixing accuracy of the fitting can be prevented from being deteriorated even when the matrix is fractured. Further, when the fibers are suppressed from being corrugated, conditions of the fibers can be stabilized in each product. Thus, fluctuation in strength from product to product can be suppressed.

When the reinforced fiber bundle comprising the round portion as described above further comprises a straight portion, it is difficult to twist the roundportion alone. As a countermeasure, the entire reinforced fiber bundle is twisted, that is, not only the round portion but also the straight portion is twisted. With this, the fitting can be easily manufactured. When the reinforced fiber bundle is twisted in this way, as illustrated in FIG. 5, an orientation direction Q of each of the fibers is inclined with respect to a direction P in which a tensile load is applied to the reinforced fiber bundle. As a result, a tensile strength of the fitting is decreased. Thus, hitherto, twisting of the reinforced fiber bundle has been practically avoided. However, in the case of the reinforced fiber bundle comprising the round portion, when the corrugation of the fibers on the inner peripheral side is suppressed through the twisting of the round portion, advantages in that the strength is increased and suppressed in its fluctuation are obtained, which compensate a disadvantage in that the strength is decreased as a result of the twisting of the reinforced fiber bundle. Thus, the strength of the entire fitting can be increased.

### Advantageous Effects of Invention

As described above, according to the composite lightweight fitting of the one embodiment of the present invention, the corrugation of the reinforced fibers on the inner peripheral side of the round portion is suppressed, to thereby suppress the decrease and the fluctuation in strength of the fitting, which may be caused by the corrugation. As a result, the number of the reinforced fibers to be used is suppressed, thereby being capable of achieving cost reduction and weight reduction.

### Brief Description of Drawings

FIG. 1(a) is a plan view for illustrating a composite lightweight fitting according to an embodiment of the present invention.
FIG. 1(b) is a sectional view for illustrating the composite lightweight fitting.
FIG. 2 (a) is a plan view for illustrating a reinforced fiber layer of the composite lightweight fitting.
FIG. 2 (b) is a plan view for illustrating a reinforced fiber layer of the composite lightweight fitting.
FIG. 2 (c) is a plan view for illustrating a reinforced fiber layer of the composite lightweight fitting.
FIG. 2 (d) is a plan view for illustrating a reinforced fiber layer of the composite lightweight fitting.
FIG. 2 (e) is a plan view for illustrating a reinforced fiber layer of the composite lightweight fitting.
FIG. 3 is an enlarged plan view for illustrating the reinforced fiber layer illustrated in FIG. 2(a).
FIG. 4 is an enlarged plan view for illustrating a periphery of a through-hole of FIG. 3
FIG. 5 is a plan view for illustrating a state in which a reinforced fiber bundle is twisted.
FIG. 6 (a) is a sectional view for illustrating a related-art fitting.
FIG. 6(b) is a plan view for illustrating the related-art fitting.
FIG. 7 (a) is a plan view for illustrating a reinforced fiber layer of the related-art composite lightweight fitting.
FIG. 7(b) is a plan view for illustrating a reinforced fiber layer of the related-art composite lightweight fitting.
FIG. 7(c) is a plan view for illustrating a reinforced fiber layer of the related-art composite lightweight fitting.
FIG. 7(d) is a plan view for illustrating a reinforced fiber layer of the related-art composite lightweight fitting.
FIG. 8 is a plan view for illustrating a reinforced fiber layer comprising reinforced fiber bundles each comprising a round portion.
FIG. 9 is an enlarged plan view for illustrating a periphery of a through-hole of FIG. 8.

### Description of Embodiments

Now, description is made of an embodiment of the present invention with reference to the drawings.

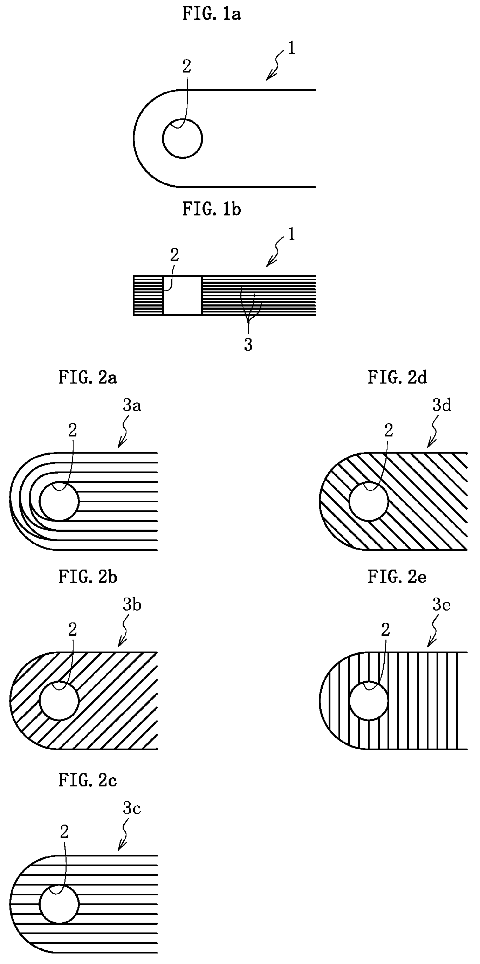

As illustrated in FIGS. 1, a composite lightweight fitting 1 according to this embodiment (hereinafter also simply referred to as "fitting 1") has a cylindrical-surface-like through-hole 2 for allowing a pin (such as bolt) to be inserted therethrough. The fitting 1 comprises reinforced fiber layers 3 each formed by aligning reinforced fibers, and a matrix (not shown) impregnated and cured in a laminated body formed by laminating the reinforced fiber layers 3. Examples of the reinforced fibers include carbon fibers, glass fibers, and ceramic fibers. Examples of the matrix include a resin (organic matter) and inorganic matter.

The reinforced fiber layers 3 are each formed by arraying reinforced fiber bundles into a shape of a single sheet. The reinforced fiber bundles each comprise a large number of fibers that are aligned into a belt-like shape. The fitting 1 comprises a plurality of types of the reinforced fiber layers 3 different in fiber orientation direction from each other, and the fiber orientation directions of the adjacent reinforced fiber layers 3 intersect with each other. In this embodiment, a direction in which a tensile load is applied to the fitting 1 (right-and-left direction in FIGS. 2) is defined as a 0° direction, and a direction along a periphery of the through-hole 2 is defined as a round direction. Then, a reinforced fiber layer 3a comprising fibers oriented in the 0° direction and the round direction (refer to FIG. 2(a)), a reinforced fiber layer 3b comprising fibers oriented in a 45° direction (refer to FIG. 2 (b)), a reinforced fiber layer 3c comprising fibers oriented in the 0° direction (refer to FIG. 2 (c)), a reinforced fiber layer 3d comprising fibers oriented in a 135° direction (refer to FIG. 2(d)), and a reinforced fiber layer 3e comprising fibers oriented in a 90° direction (refer to FIG. 2(e)) are laminated in the stated order.

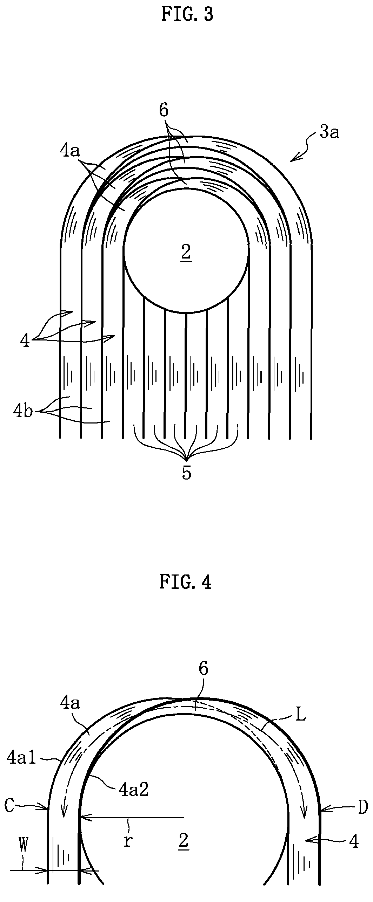

Of the reinforced fiber layers 3, the reinforced fiber layer 3a comprising the fibers oriented in the 0° direction and the round direction as illustrated in FIG. 2(a) comprises, as illustrated on an enlarged scale in FIG. 3, reinforced fiber bundles 4 each comprising a round portion 4a arranged along the periphery of the through-hole 2 and a straight portion 4b, and reinforced fiber bundles 5 each comprising only a straight portion. In each of the reinforced fiber bundles 4, at least the round portion 4a is twisted. In the illustrated example, the belt-like reinforced fiber bundles 4 are each turned by approximately 180° over the round portion 4a, and narrowest parts in plan view (referred to as "narrow portions 6") are arranged within a range of the round portions 4a (in the illustrated example, vicinity of central portions of the round portions 4a).

In this way, when the round portion 4a of the reinforced fiber bundle 4 is twisted, inner peripheral fibers and outer peripheral fibers of the round portion 4a are reversed to each other. Specifically, as illustrated in FIG. 4, a reinforced fiber 4a1, which is arranged on an outer peripheral side at an end portion C of the round portion 4a of each of the reinforced fiber bundles 4 on one side in a circumferential direction (left-side end portion in FIG. 4), is positioned on an inner peripheral side at an end portion D of the round portion 4a on another side in the circumferential direction (right-side end portion in FIG. 4). Meanwhile, a reinforced fiber 4a2 (indicated by bold line), which is arranged on the inner peripheral side at the end portion C of the round portion 4a of each of the reinforced fiber bundles 4 on the one side in the circumferential direction, is positioned on the outer peripheral side at the end portion D of the round portion 4a on the another side in the circumferential direction. In this way, when the fibers on the inner peripheral side and the fibers on the outer peripheral side with respect to the center of the round portion 4a of each of the reinforced fiber bundles 4 in a width direction are reversed to each other, a difference in fiber length between both the reinforced fibers 4a1 and 4a2 is reduced. Specifically, when the fibers on the inner peripheral side and the fibers on the outer peripheral side with respect to the center of each of reinforced fiber bundles 4 in the width direction are reversed to each other at both the ends of the round portion 4a in the circumferential direction, the difference in fiber length between both the reinforced fibers 4a1 and 4a2 is substantially offset.

With this, all fibers forming the round portions 4a are substantially equalized to each other in fiber length, and hence corrugation of the fibers on the inner peripheral side is suppressed. Thus, the fibers on the inner peripheral side can effectively contribute to a strength of the entire fitting 1. As a result, the fitting 1 is increased in strength. Further, when the corrugation of the fibers is suppressed, the matrix is suppressed from entering parts swelled as a result of the corrugation of the fibers. With this, formation of matrix-rich portions is suppressed in a composite material. As a result, the fitting 1 is further increased in strength. In particular, as illustrated in FIG. 4, the formation of the matrix-rich portions is suppressed at parts facing the through-hole 2, specifically, parts to be held in direct contact with the pin to be inserted through the through-hole 2. With this, the fitting can be prevented from being decreased in strength even when the matrix is fractured. Further, when the corrugation of the fibers on the inner peripheral side of the round portion 4a is suppressed, conditions of the fibers can be stabilized in each product. Thus, fluctuation in strength from product to product can be suppressed.

Further, the corrugation of the fibers on the inner peripheral side of the round portion 4a becomes more liable to occur as a radius r of the through-hole 2 of the fitting 1 becomes smaller, and as a width w of each of the reinforced fiber bundles 4 becomes larger. Therefore, as a ratio (w/r) of the width w of each of the reinforced fiber bundles 4 relative to the radius r of the through-hole 2 becomes higher, twisting of the round portions 4a as described above becomes more advantageous. Specifically, when the ratio w/r is 0.1 or more, more specifically, 0.3 or more, the twisting of the roundportions is significantly advantageous. For example, when the width w of each of the reinforced fiber bundles is approximately 3 mm to 5 mm, and the radius r of the through-hole 2 is 30 mm or less, specifically, 20 mm or less, more specifically, 10 mm or less, the twisting of the round portions is particularly advantageous.

In order to twist the round portion 4a, for example, it is only necessary to twist the reinforced fiber bundle 4 at a predetermined pitch in advance, and to arrange this reinforced fiber bundle 4 along the periphery of the through-hole 2. In this case, when a twist pitch of the reinforced fiber bundle 4 (in other words, pitch of the narrow portion 6) is set equal to a circumferential length L of the round portion 4a in advance, the narrow portion 6 can be arranged in each of the round portions 4a.

In this way, when the reinforced fiber bundle 4 is twisted at the predetermined pitch, not only the round portion 4a but also the straight portion 4b is twisted. In this case, as illustrated in FIG. 5, an orientation direction Q of each of the fibers is inclined with respect to a direction P in which the tensile load is applied to the reinforced fiber bundle 4 (0° direction), and hence a tensile strength of the fitting 1 is decreased. However, when the corrugation of the fibers on the inner peripheral side is suppressed through the twisting of the round portion 4a, advantages in that the strength is increased and suppressed in its fluctuation are obtained, which compensate a disadvantage in that the strength is decreased as a result of the twisting of the reinforced fiber bundles 4. Thus, the strength of the entire fitting 1 can be increased.

Methods of twisting the round portion 4a are not limited to that described above. For example, the round portion 4a may be twisted by turning the reinforced fiber bundle 4 while arranging the reinforced fiber bundle 4 along the periphery of the through-hole 2.

The composite lightweight fitting 1 described above can be used, for example, as a fitting 100 configured to connect members A and B that are separately formed as illustrated in FIGS. 6. In this case, as in the illustration, it is preferred that, on outer peripheral surfaces of pins (bolts 110), at least regions to radially face through-holes 101 be each formed to have a cylindrical surface so as to be held in contact with the through-holes 101 over a larger area. Alternatively, although not shown, the composite lightweight fitting 1 described above may be used as a fitting to be provided integrally with the member A on one side and to be connected to the member B on another side through intermediation of the pin. Further, the pin to be inserted through the through-hole 2 may be a member configured to fix the fitting 1 and another member to each other (rigid fitting), and a member configured to allow relative rotations between the fitting 1 and the another member about the pin (rotary fitting).

In the embodiment described above, the case where the round portion 4a of each of the reinforced fiber bundles 4 is turned once (by 180°) is described, but the present invention is not limited thereto. As long as the reinforced fiber bundles 4a are twisted at their round portions 4a, the advantage of reducing the difference in fiber length can be obtained. Specifically, in order to reduce differences in length between fibers forming the round portions 4a, the round portion 4a of each of the reinforced fiber bundles 4 may be turned a plurality of times (by more than 180°).

The composite lightweight fitting 1 as described above may be used, for example, in transportation equipment such as an aircraft and an automobile, and in constructions such as a building and a bridge.

### Reference Signs List

- 1: composite lightweight fitting
- 2: through-hole
- 3 (3a-3e): reinforced fiber layer
- 4: reinforced fiber bundle
- 4a: round portion
- 4a1, 4a2: reinforced fiber
- 4b: straight portion
- 5: reinforced fiber bundle
- 6: narrow portion

## Claims

1. A composite lightweight fitting, comprising a composite material comprising a laminated body formed by laminating reinforced fiber layers, and a matrix impregnated and cured in the laminated body,
the composite lightweight fitting having a through-hole formed through the reinforced fiber layers in a thickness direction of the reinforced fiber layers,
wherein at least one reinforced fiber layer of the reinforced fiber layers comprises a reinforced fiber bundle formed by aligning a large number of reinforced fibers into a belt-like shape, the reinforced fiber bundle comprising a round portion arranged along a periphery of the through-hole, and
wherein the round portion of the reinforced fiber bundle is twisted.

2. The composite lightweight fitting according to claim 1, wherein reinforced fibers on an inner peripheral side of the round portion and reinforced fibers on an outer peripheral side of the round portion are reversed to each other at both ends of the round portion in a circumferential direction of the round portion.

3. The composite lightweight fitting according to claim 1 or 2,
wherein the reinforced fiber bundle further comprises a straight portion, and
wherein the straight portion is also twisted.
